(19) Europäisches Patentamt / European Patent Office / Office européen des brevets

(11) **EP 4 232 789 B1**

(12) **FASCICULE DE BREVET EUROPEEN**

(45) Date de publication et mention de la délivrance du brevet:
**25.09.2024 Bulletin 2024/39**

(21) Numéro de dépôt: **21810667.2**

(22) Date de dépôt: **25.10.2021**

(51) Classification Internationale des Brevets (IPC):
**G01M 15/14** *(2006.01)* **G01M 5/00** *(2006.01)*

(52) Classification Coopérative des Brevets (CPC):
**G01M 15/14; G01M 5/0033**

(86) Numéro de dépôt international:
**PCT/FR2021/051866**

(87) Numéro de publication internationale:
**WO 2022/090656 (05.05.2022 Gazette 2022/18)**

(54) **PROCÉDÉ D'ÉVALUATION D'UNE DURÉE DE VIE D'UNE PIÈCE DE TURBOMACHINE**

VERFAHREN ZUR BEURTEILUNG DER LEBENSDAUER EINES TURBINENMOTORTEILS

METHOD FOR ASSESSING THE SERVICE LIFE OF A TURBINE ENGINE PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2020 FR 2010950**

(43) Date de publication de la demande:
**30.08.2023 Bulletin 2023/35**

(73) Titulaire: **SAFRAN AIRCRAFT ENGINES**
**75015 Paris (FR)**

(72) Inventeurs:
• **KESSACI, Aniss Chafik**
**77550 MOISSY-CRAMAYEL (FR)**
• **NAY, Jean Arthur Sébastien**
**77550 MOISSY-CRAMAYEL (FR)**

(74) Mandataire: **Regimbeau**
**20, rue de Chazelles**
**75847 Paris Cedex 17 (FR)**

(56) Documents cités:
EP-A1- 3 660 484     WO-A1-2015/053950
WO-A1-2018/169722     FR-A1- 3 066 273
FR-A1- 3 087 241     FR-A1- 3 087 888

EP 4 232 789 B1

**Description**

**DOMAINE DE L'INVENTION**

La présente invention concerne le domaine des turbomachines. Elle vise en particulier à évaluer la durée de vie d'une pièce de turbomachine en prenant en compte l'évolution de l'usure avec le temps de fonctionnement de la turbomachine.

**ETAT DE LA TECHNIQUE**

Lors du fonctionnement d'une turbomachine, ses pièces sont soumises à des efforts, frottements et contraintes mécaniques. Les pièces peuvent donc s'user progressivement au cours du temps de fonctionnement de la turbomachine. Le temps de fonctionnement de la turbomachine dans laquelle les pièces sont montées est classiquement mesuré en nombre de cycles de fonctionnement de la turbomachine.

L'usure est susceptible de modifier la géométrie de la pièce, c'est-à-dire sa surface externe, par exemple lorsque l'usure se manifeste par l'apparition de marques de frottement creusant la pièce sur une certaine profondeur et/ou d'irrégularités de surfaces.

Une pièce neuve, qui n'a pas encore subi de cycle de fonctionnement de la turbomachine, présente une usure nulle. L'usure de la pièce augmente au cours du fonctionnement de la turbomachine, jusqu'à provoquer la rupture de la pièce.

L'endommagement de la pièce est une valeur représentative de l'usure de la pièce. L'endommagement varie entre un endommagement nul pour une pièce non usée, et un endommagement à la rupture de la pièce.

Dans un premier temps, la pièce subit un endommagement en amorçage, c'est-à-dire un endommagement sans modification de la géométrie de la pièce, la pièce présentant une géométrie correspondant à sa géométrie en sortie d'usine. Dans un deuxième temps, la pièce subit un endommagement en propagation, c'est-à-dire un endommagement de la pièce une fois sa géométrie modifiée, par exemple par l'apparition d'une marque de frottement caractéristique d'une usure.

La durée de vie d'une pièce correspond au nombre de cycles de fonctionnement de la turbomachine que la pièce peut supporter avant sa rupture, c'est-à-dire au nombre de cycles de fonctionnement de la turbomachine que la pièce peut supporter avant que son endommagement n'atteigne l'endommagement à la rupture.

L'évaluation de la durée de vie d'une pièce de turbomachine permet de définir des critères de maintenance pour faire repartir la pièce en vol, ou au contraire la mettre de côté en vue de sa maintenance ou de son remplacement.

Actuellement, la durée de vie des pièces de turbomachine est évaluée à partir des contraintes et de la température à laquelle est soumise la pièce en prenant pour hypothèse que la géométrie de la pièce reste constante au cours du fonctionnement de la turbomachine. Dans ce procédé, la durée de vie de la pièce est donc déterminée pour une géométrie donnée, sans tenir compte de l'évolution possible de l'usure de la pièce, donc de sa géométrie, lors du fonctionnement ultérieur de la turbomachine. Les contraintes s'appliquant sur la pièce, c'est-à-dire les contraintes au sein de la pièce, sont estimées pour cette géométrie déterminée de la pièce. Les contraintes s'appliquant sur la pièce sont donc constantes avec le temps de fonctionnement de la turbomachine.

Par ailleurs, une autre hypothèse est que l'endommagement moyen de la pièce par cycle de fonctionnement de la turbomachine est supposé constant, c'est-à-dire que l'endommagement cumulé de la pièce est supposé varier linéairement avec le temps de fonctionnement de la turbomachine, jusqu'à la rupture de la pièce.

Ainsi, ce procédé actuel se contente d'évaluer une durée de vie de la pièce pour une géométrie donnée, sans tenir compte de l'évolution probable de l'usure de la pièce et donc de sa géométrie dans le temps.

Or, certaines pièces de la turbomachine voient leur géométrie impactée par l'évolution de l'usure lors du temps de fonctionnement de la turbomachine. Par exemple, les usures à petits débattements dans les disques de compresseur basse de pression sont des usures évolutives, qui modifient la géométrie de la pièce.

Les contraintes s'appliquant sur la pièce, à partir desquelles la durée de vie de la pièce est évaluée, dépendent de la géométrie de la pièce. Par conséquent, la durée de vie de la pièce dépend de l'évolution de la géométrie de la pièce, donc de l'évolution de son usure, avec le temps de fonctionnement de la turbomachine.

L'endommagement de la pièce, en particulier l'endommagement en propagation une fois l'usure apparue, ne varie donc pas linéairement avec le temps. En effet, plus la pièce présente une usure importante, plus les contraintes s'appliquant sur la pièce sont importantes (effet de concentration de contrainte), donc plus l'endommagement de la pièce par cycle de fonctionnement de la turbomachine est important. La courbe représentant l'endommagement en propagation en fonction du temps est donc croissante et convexe, et non linéaire.

Ainsi, le procédé actuel ne permet pas d'évaluer avec précision la durée de vie d'une pièce présentant une usure évoluant avec le temps de fonctionnement de la turbomachine et dont les contraintes s'appliquant sur la pièce dépendent de son usure.

Par conséquent, afin de ne pas risquer de conserver des pièces susceptibles de rompre, ces pièces doivent être mises de côté tôt, sans avoir effectué un nombre d'heures de vol optimal. Les pièces doivent être réparées ou changées fréquemment. Le nombre de pièces indisponibles est important, les coûts de maintenance sont élevés, et la maintenance est lourde car elle doit être réalisée fréquemment.

FA3087241 et FA3087888 divulguent des moyens de modélisation de l'endommagement d'une pièce de turbomachine et de détermination de la durée de vie de ladite pièce. II

## EXPOSE DE L'INVENTION

Un but de l'invention est de proposer un procédé d'évaluation d'une durée de vie d'une pièce de turbomachine permettant une évaluation plus précise de la durée de vie de la pièce par rapport à l'art antérieur en tenant compte de l'évolution de l'usure de la pièce en fonction du temps de fonctionnement de la turbomachine.

Un autre but de l'invention est de proposer un procédé d'évaluation d'une durée de vie d'une pièce de turbomachine permettant de développer des critères de maintenance améliorés.

L'invention concerne un procédé d'évaluation d'une durée de vie d'une pièce de turbomachine, comprenant les étapes suivantes :

S1 : déterminer un endommagement moyen de la pièce en fonction du temps à partir d'une loi d'évolution de contraintes appliquées sur la pièce en fonction d'une usure de la pièce et d'une loi d'évolution de l'usure de la pièce en fonction du temps;

S2 : déterminer un endommagement à la rupture de la pièce ;

53 : déterminer un endommagement cumulé de la pièce correspondant à l'endommagement à la rupture de la pièce, ledit endommagement cumulé correspondant à l'intégrale de l'endommagement moyen en fonction du temps entre un instant initial et un instant final :

$$E\_cum = E\_rupt = \int_{t\_0}^{t\_rupt} E\_moy(t)dt$$

; et

S4 : en déduire la durée de vie de la pièce, ladite durée de vie correspondant à l'instant final.

Certaines caractéristiques préférées mais non limitatives du procédé décrit ci-dessus sont les suivantes, prises individuellement ou en combinaison :

- l'étape S1 de détermination d'un endommagement moyen de la pièce en fonction du temps comprend une étape S11 dans laquelle sont définies plusieurs usures différentes de la pièce, et comprend les étapes suivantes, réalisées pour chaque usure définie de la pièce :

- S12 : déterminer une géométrie de la pièce à partir de l'usure définie à l'étape S11, de sorte à déterminer une loi d'évolution de la géométrie de la pièce en fonction de l'usure,

- S13 : déterminer des contraintes appliquées sur la pièce à partir de la géométrie de la pièce déterminée à l'étape S12, de sorte à déterminer une loi d'évolution des contraintes appliquées sur la pièce en fonction de l'usure,

- S14 : déterminer une durée de vie à usure constante de la pièce à partir des contraintes appliquées sur la pièce déterminées à l'étape S13, de sorte à déterminer une loi d'évolution de la durée de vie à usure constante de la pièce en fonction de l'usure,

- S15 : déterminer un endommagement moyen de la pièce à partir de la durée de vie à usure constante de la pièce déterminée à l'étape S14, de sorte à déterminer une loi d'évolution de l'endommagement moyen de la pièce en fonction de l'usure ;

- l'étape S1 de détermination d'un endommagement moyen de la pièce en fonction du temps comprend en outre une étape S16 consistant à déterminer l'endommagement moyen de la pièce en fonction du temps à partir de la loi dévolution de l'endommagement moyen de la pièce en fonction de l'usure et de la loi d'évolution de l'usure en fonction du temps ;

- la loi d'évolution de l'endommagement moyen de la pièce en fonction de l'usure est égale à l'inverse de la loi d'évolution de la durée de vie à usure constante de la pièce en fonction de l'usure ;

- le procédé est mis en oeuvre pour évaluer la durée de vie d'un disque de compresseur basse pression ;

- la loi d'évolution de l'usure de la pièce en fonction du temps est une loi d'évolution de la profondeur de l'usure en fonction du temps ;

- l'endommagement à la rupture de la pièce est égal à 1.

## DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :

La figure 1 est un schéma bloc représentant des étapes d'un procédé selon un mode de réalisation de l'invention.

La figure 2 est un schéma bloc représentant des étapes de détermination d'un endommagement moyen en fonction du temps selon un mode de réalisation de l'invention.

La figure 3 est un graphe illustrant l'évolution de la durée de vie d'une pièce en fonction de son usure, pour une usure supposée constante dans le temps, la durée de vie étant évaluée au cours d'un procédé selon un mode de réalisation de l'invention.

La figure 4 est un graphe illustrant l'évolution de l'endommagement moyen d'une pièce en fonction de son usure, pour une usure supposée constante dans le temps, l'endommagement moyen étant déterminé au cours d'un procédé selon un mode de réalisation de l'invention.

La figure 5 est un graphe illustrant l'évolution de l'endommagement moyen d'une pièce en fonction du temps, l'endommagement moyen étant déterminé au cours d'un procédé selon un mode de réalisation de l'invention.

Les figures 6a et 6b sont des vues en coupe de côté d'une partie d'un compresseur de turbomachine comprenant une pièce dont la durée de vie peut être évaluée par un procédé d'évaluation selon un mode de réalisation de l'invention.

## DESCRIPTION DETAILLEE DE L'INVENTION

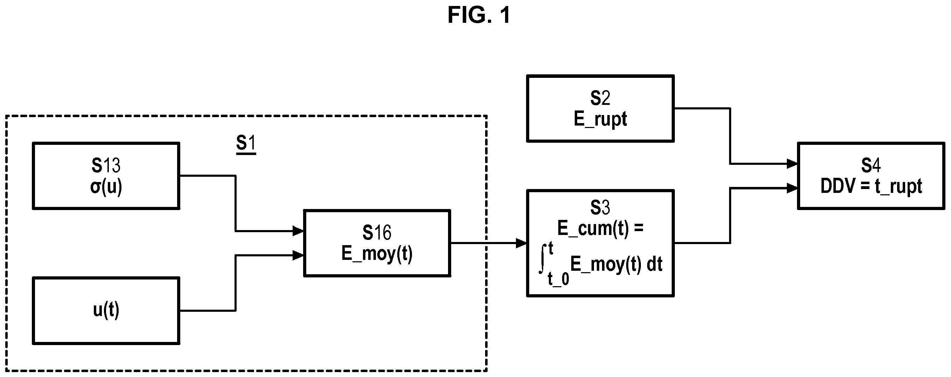

Un procédé d'évaluation d'une durée de vie DDV d'une pièce de turbomachine, illustré à titre d'exemple non limitatif en figure 1, comprend les étapes suivantes :

S1 : déterminer un endommagement moyen de la pièce en fonction du temps E_moy(t) à partir d'une loi d'évolution de contraintes appliquées sur la pièce en fonction d'une usure de la pièce $\sigma(u)$ et d'une loi d'évolution de l'usure de la pièce en fonction du temps u(t) ;
S2 : déterminer un endommagement à la rupture E_rupt de la pièce ;
S3 : déterminer un endommagement cumulé E_cum de la pièce correspondant à l'endommagement à la rupture E_rupt de la pièce, ledit endommagement cumulé E_cum correspondant à l'intégrale de l'endommagement moyen en fonction du temps E_moy(t) entre un instant initial t_0 et un instant final t_rupt :

$$E\_cum = E\_rupt = \int_{t\_0}^{t\_rupt} E\_moy(t)dt \; ; \text{ et}$$

S4 : en déduire la durée de vie DDV de la pièce, ladite durée de vie DDV correspondant à l'instant final t_rupt.

L'endommagement moyen de la pièce en fonction du temps E_moy(t), qui est utilisé pour déterminer la durée de vie DDV de la pièce, est ainsi déterminé à partir d'une loi d'évolution des contraintes appliquées sur la pièce en fonction d'une usure de la pièce $\sigma(u)$ et d'une loi d'évolution de l'usure de la pièce en fonction du temps u(t).
Ainsi, le procédé décrit permet d'évaluer une durée de vie DDV de la pièce en tenant compte de l'évolution de l'usure de la pièce au cours du fonctionnement de la turbomachine. Le procédé peut être appliqué à toute pièce de turbomachine, notamment toute pièce présentant une usure évoluant avec le temps de fonctionnement de la turbomachine. En particulier, le procédé permet de déterminer l'endommagement en propagation et en amorçage de la pièce, lorsque l'usure de la pièce en modifie la géométrie.

Le procédé décrit permet de prendre en compte le fait que l'évolution de l'usure de la pièce entraîne une modification de la géométrie de la pièce, donc des contraintes exercées sur la pièce, donc de la durée de vie de la pièce. En effet, plus la pièce présente une usure importante, plus les contraintes au sein de la pièce sont importantes (effet de concentration de contrainte), donc plus l'endommagement de la pièce par cycle de fonctionnement de la turbomachine est important.

Le procédé décrit permet donc d'évaluer la durée de vie d'une pièce de manière plus précise que les modèles de l'art antérieur. Ainsi, le temps de vol de la pièce avant sa mise de côté en vue de la réparer ou de la remplacer peut être augmenté. En variante ou en outre, les marges de fabrication de la pièce peuvent être réduites. Le nombre de pièces disponibles en un instant donné est augmenté. Le procédé permet donc de développer des critères de maintenance plus efficaces, de réduire les coûts de maintenance et d'espacer la maintenance sur les pièces concernées.

### Notions préliminaires

L'usure de la pièce correspond à une altération de la pièce liée à son usage prolongé lors du fonctionnement de la turbomachine. L'usure peut en particulier être une usure mécanique générée par des efforts, des frottements et/ou des contraintes subis par la pièce lors du fonctionnement de la turbomachine.

L'usure peut modifier la géométrie de la pièce, c'est-à-dire une surface externe de la pièce. Par exemple, l'usure peut se manifester sous la forme d'une ou plusieurs marques de frottement creusant localement la pièce et/ou sous la forme d'irrégularités de surface externe.

L'usure peut être définie par une dimension de l'usure. Par exemple, l'usure peut être définie par une profondeur d'usure, c'est-à-dire d'une dimension de l'usure dans une direction normale à la direction du plan tangent à la surface externe de la pièce au niveau de l'usure. La pièce peut présenter plusieurs zones d'usures présentant plusieurs profondeurs d'usure différentes, la profondeur d'usure désignant alors la plus grande profondeur parmi les profondeurs d'usure des plusieurs zones d'usures de la pièce. En variante ou en outre, l'usure peut être définie par une longueur et/ou une largeur d'usure.

L'usure peut ainsi être définie par n'importe quelle combinaison de dimensions de l'usure dans n'importe quelle combinaison de directions.

Le temps de fonctionnement peut désigner un nombre de cycles de fonctionnement effectués par la turbomachine dans laquelle la pièce est montée. Une unité de temps désigne ainsi un cycle de fonctionnement de la turbomachine. Un cycle de fonctionnement peut par exemple comprendre un décollage, une mission et un atterrissage et correspondre à un certain nombre d'heures de vol. En variante, le temps de fonctionnement peut désigner un nombre d'heures de vol effectuées par la turbomachine dans laquelle la pièce est montée. Une unité de temps désigne alors une heure de vol.

La durée de vie DDV de la pièce correspond au temps qui s'écoule avant la rupture de la pièce. La durée de vie DDV désigne ainsi le nombre d'unités de temps, par exemple le nombre de cycles de fonctionnement de la turbomachine, que la pièce peut supporter avant sa rupture.

La rupture de la pièce peut correspondre à une rupture physique de la pièce en raison d'une usure de dimensions trop importantes, ou correspondre à une usure de dimensions telles que la pièce n'est plus fonctionnelle, et entraîne une dégradation supérieure à un certain seuil des performances de la turbomachine.

L'endommagement de la pièce est déterminé à partir de l'usure de la pièce qui dépend du temps de fonctionnement, l'endommagement étant représentatif de l'usure de la pièce.

L'endommagement moyen de la pièce correspond à un endommagement de la pièce par unité de temps.

L'endommagement cumulé de la pièce à un temps t correspond à l'endommagement de la pièce après t unités de temps. L'endommagement cumulé de la pièce varie entre un endommagement de pièce neuve E_neuf et un endommagement à la rupture E_rupt.

L'endommagement de la pièce neuve E_neuf correspond à l'endommagement d'une pièce non usée, par exemple d'une pièce qui n'a pas encore subi de cycles de fonctionnement. La géométrie d'une pièce non usée correspond donc à la géométrie de la pièce en sortie d'usine. L'endommagement de pièce neuve E_neuf est déterminé à un temps initial de fonctionnement t_0 de la turbomachine, qui peut être égal à 0. Le cas échéant, l'endommagement de pièce neuve E_neuf peut être égal à 0.

L'endommagement à la rupture E_rupt correspond à l'endommagement de la pièce au moment où survient sa rupture. L'endommagement à la rupture E_rupt correspond donc à un endommagement maximal de la pièce, à un temps de fonctionnement à la rupture t_rupt de la turbomachine qui est égal à la durée de vie DDV de la pièce. Le cas échéant, l'endommagement à la rupture E_rupt de la pièce peut être égal à 1.

### Loi d'évolution de l'usure en fonction du temps

La loi d'évolution de l'usure en fonction du temps u(t) correspond à la cinétique d'usure de la pièce. La loi d'évolution de l'usure en fonction du temps u(t) traduit l'évolution de l'usure dans le temps de la pièce, c'est-à-dire l'évolution des dimensions de l'usure avec le temps de fonctionnement de la turbomachine. La loi d'évolution de l'usure de la pièce en fonction du temps u(t) relie donc les dimensions de l'usure, typiquement la profondeur de l'usure, au nombre d'unités de temps, en particulier au nombre de cycles de fonctionnement de la turbomachine. En effet, plus le temps de fonctionnement de la turbomachine dans laquelle la pièce est montée augmente, plus l'usure de la pièce augmente.

Dans ce qui suit, l'invention sera plus particulièrement décrite dans le cas où la loi d'évolution de l'usure de la pièce en fonction du temps u(t) est une loi d'évolution de la profondeur de l'usure en fonction du temps. Ceci n'est cependant pas limitatif, la loi d'évolution de l'usure en fonction du temps u(t) pouvant être une loi d'évolution de toute combinaison de dimensions de l'usure selon toute combinaison de directions envisageables, comme précisé plus haut.

La loi d'évolution de l'usure d'une pièce en fonction du temps u(t) peut être déterminée par exemple à partir d'une base de données établie à partir d'essais réalisés sur la pièce et/ou à partir d'une base de données établie à partir de données collectées sur le parc de pièces montées dans des turbomachines en fonctionnement. Le cas échéant, la loi d'évolution de l'usure d'une pièce en fonction du temps u(t) peut prendre en compte une dispersion statistique de l'usure.

**Détermination de l'endommagement moyen de la pièce en fonction du temps**

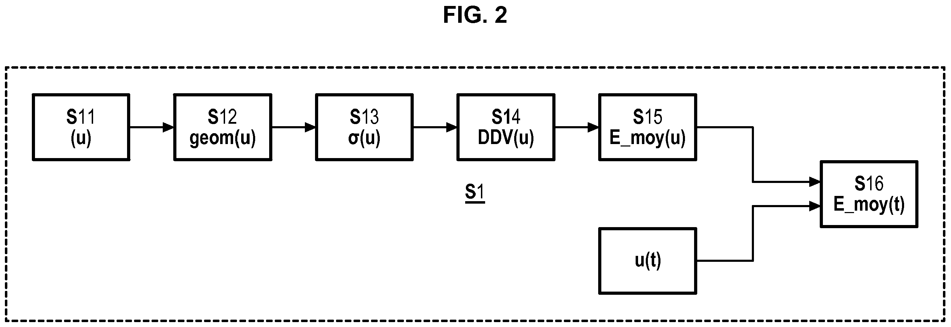

Ainsi qu'illustré à titre d'exemple non limitatif en figure 2, l'étape S1 de détermination d'un endommagement moyen de la pièce en fonction du temps E_moy(t) peut comprendre une étape S11 dans laquelle sont définies plusieurs usures différentes u de la pièce et comprendre les étapes suivantes, réalisées pour chaque usure définie u de la pièce :

S12 : déterminer une géométrie de la pièce à partir de l'usure définie u à l'étape S11, de sorte à déterminer une loi d'évolution de la géométrie de la pièce en fonction de l'usure geom(u),
S13 : déterminer des contraintes appliquées sur la pièce à partir de la géométrie de la pièce déterminée à l'étape S12, de sorte à déterminer une loi d'évolution des contraintes appliquées sur la pièce en fonction de l'usure σ(u),
S14 : déterminer une durée de vie à usure constante de la pièce à partir des contraintes appliquées sur la pièce déterminées à l'étape S13, de sorte à déterminer une loi d'évolution de la durée de vie à usure constante de la pièce en fonction de l'usure DDV(u),
S15 : déterminer un endommagement moyen de la pièce à partir de la durée de vie à usure constante de la pièce déterminée à l'étape S14, de sorte à déterminer une loi d'évolution de l'endommagement moyen de la pièce en fonction de l'usure E_moy(u).

Les étapes S12 à S15 de détermination de la géométrie, des contraintes, de la durée de vie à usure constante et de l'endommagement moyen de la pièce, sont répétées pour chacune des plusieurs usures définies u, de sorte à obtenir des lois d'évolutions correspondantes en fonction de l'usure.

Les usures u définies correspondent à un maillage sur l'usure de la pièce. Le nombre d'usures u définies fixe la finesse du maillage. Ainsi, plus le nombre d'usures u définies est important, plus l'endommagement moyen est déterminé pour un grand nombre d'usures u définies, donc plus la loi d'évolution de l'endommagement moyen de la pièce en fonction de l'usure E_moy(u) est définie avec précision.

Par exemple, les usures u définies lors de l'étape S11 peuvent correspondre à plusieurs profondeurs d'usure définies. La détermination de l'endommagement moyen de la pièce peut être réalisée pour chaque profondeur d'usure parmi les profondeurs d'usure définies u suivantes : 0 mm, 0,2 mm, 0,5 mm, 0,8 mm et 1 mm.

La loi d'évolution de la géométrie de la pièce en fonction de l'usure geom(u), déterminée grâce à la répétition de l'étape S12 pour chacune des usures définies u, caractérise l'évolution de la géométrie de la pièce en fonction de son usure.

En effet, l'usure de la pièce modifie la géométrie de la pièce, c'est-à-dire la surface externe de la pièce, par exemple par l'apparition de marques de frottement caractéristiques d'une usure, de dimensions plus ou moins importantes. Plus l'usure augmente, plus la géométrie de la pièce s'éloigne de la géométrie de la pièce en sortie d'usine. À une usure définie u correspond donc une géométrie définie de la pièce.

La loi d'évolution des contraintes appliquées sur la pièce en fonction de l'usure σ(u), déterminée grâce à la répétition de l'étape S13 pour chacune des usures u définies caractérise l'évolution des contraintes appliquées sur la pièce, c'est-à-dire des contraintes au sein de la pièce, en fonction de son usure.

En effet, les contraintes appliquées sur la pièce varient en fonction de la géométrie de la pièce, c'est-à-dire de la surface externe de la pièce, donc de l'usure de la pièce. En particulier, les contraintes appliquées sur la pièce augmentent lorsque les dimensions de l'usure augmentent. Une pièce usée est donc soumise à davantage de contraintes qu'une pièce neuve.

Pour une usure u définie, donc une géométrie de la pièce définie, un ensemble de contraintes s'appliquant sur la pièce est déterminé. L'ensemble de contraintes s'appliquant sur la pièce pour une usure u définie peut correspondre à un champ de contraintes et être calculé par un modèle éléments finis avec une modélisation de la géométrie de la pièce.

L'étape S1 de détermination d'un endommagement moyen de la pièce en fonction du temps E_moy(t) peut comprendre en outre une étape de détermination des sollicitations appliquées sur la pièce en fonction de l'usure.

Pour chacune des usures u définies, les sollicitations appliquées sur la pièce sont déterminées à partir des contraintes appliquées sur la pièce et le cas échéant en fonction d'une température de la pièce lors d'une unité de temps. Ainsi, une loi d'évolution des sollicitations en fonction de l'usure peut être déterminée.

La loi d'évolution de la durée de vie à usure constante de la pièce en fonction de l'usure DDV(u), déterminée grâce à la répétition de l'étape S14 pour chacune des usures u définies, caractérise l'évolution de la durée de vie à usure constante de la pièce en fonction de son usure.

Pour une usure u définie, la durée de vie à usure constante de la pièce correspond au nombre d'unités de temps que la pièce peut effectuer tout en subissant les contraintes ou les sollicitations déterminées correspondant à l'usure u définie, avant que survienne sa rupture. En d'autres termes, la durée de vie à usure constante de la pièce pour une usure u définie correspond au nombre d'unités de temps, en particulier au nombre de cycles de fonctionnement, avant la rupture de la pièce.

La durée de vie à usure constante de la pièce est évaluée pour une usure u définie de la pièce qui est constante et n'évolue pas dans le temps. En d'autres termes, la durée de vie à usure constante de la pièce est évaluée sans prendre en compte l'évolution de l'usure de la pièce, donc de la géométrie de la pièce, donc des contraintes s'appliquant sur la pièce, avec le temps de fonctionnement de la turbomachine.

Pour une usure u définie, la durée de vie à usure constante de la pièce est évaluée à partir des sollicitations thermomécaniques (contraintes et températures) correspondant à l'usure u définie. La durée de vie à usure constante de la pièce peut être déterminée sur la base d'un modèle de propagation d'usure et/ou à partir d'une base de données, en particulier une base de données de tests de matériaux établissant une correspondance entre les sollicitations thermomécaniques exercées sur la pièce et la durée de vie à usure constante de la pièce.

La loi d'évolution de l'endommagement moyen de la pièce en fonction de l'usure E_moy(u), déterminée grâce à la répétition de l'étape S15 pour chacune des usures u définies, caractérise l'évolution de l'endommagement moyen de la pièce en fonction de l'usure.

Pour une usure u définie, l'endommagement moyen de la pièce correspond à un endommagement moyen de la pièce par unité de temps, en particulier à un endommagement moyen de la pièce au cours d'un cycle de fonctionnement de la turbomachine.

L'endommagement moyen de la pièce est déterminé pour une usure u définie qui est constante et n'évolue pas dans le temps. En d'autres termes, l'endommagement moyen de la pièce est évalué sans prendre en compte l'évolution de l'usure de la pièce, donc de la géométrie de la pièce, donc des contraintes s'appliquant sur la pièce, donc de la durée de vie de la pièce, avec le temps de fonctionnement de la turbomachine.

Pour une usure u définie, un endommagement moyen de la pièce est déterminé à partir de la durée de vie à usure constante déterminée à l'étape S13.

La loi d'évolution de l'endommagement moyen de la pièce en fonction de l'usure E_moy(u) présente un sens de variation opposé au sens de variation de la loi d'évolution de la durée de vie à usure constante de la pièce en fonction de l'usure DDV(u). En d'autres termes, lorsque la durée de vie à usure constante de la pièce diminue, l'endommagement moyen de la pièce par unité de temps augmente.

Dans un mode de réalisation, la loi d'évolution de l'endommagement moyen de la pièce en fonction de l'usure E_moy(u) est égale à l'inverse de la loi d'évolution de la durée de vie à usure constante de la pièce en fonction de l'usure DDV(u). L'endommagement moyen de la pièce par unité de temps est considéré constant, c'est-à-dire que l'endommagement de la pièce est le même pour chaque cycle de fonctionnement de la turbomachine. L'endommagement cumulé E_cum de la pièce pour une usure définie u varie linéairement au cours du fonctionnement de la turbomachine, c'est-à-dire avec le nombre d'unités de temps.

Dans ce mode de réalisation, l'endommagement cumulé de la pièce neuve E_neuf est égal à 0 en un temps de fonctionnement t_0 de la turbomachine égal à 0. L'endommagement cumulé de la pièce à la rupture E_rupt est égal à 1 en un temps de fonctionnement t_rupt de la turbomachine égal à la durée de vie de la pièce.

La loi de l'endommagement moyen de la pièce en fonction de l'usure s'exprime alors sous la forme suivante :

$$E\_moy(u) = \frac{1}{DDV(u)}.$$

Ainsi, pour une usure u définie, l'endommagement moyen de la pièce correspond à l'inverse de la durée de vie à usure constante de la pièce déterminée pour cette usure u définie, c'est-à-dire à l'inverse du nombre d'unités de temps avant la rupture de la pièce. L'endommagement moyen de la pièce est déterminé pour chacune des usures u définies.

L'étape S1 de détermination d'un endommagement moyen de la pièce en fonction du temps peut comprendre en outre une étape S16 consistant à déterminer l'endommagement moyen de la pièce en fonction du temps E_moy(t)

à partir de la loi d'évolution de l'endommagement moyen de la pièce en fonction de l'usure E_moy(u) et de la loi d'évolution de l'usure en fonction du temps u(t).

L'étape S16 consistant à déterminer l'endommagement moyen de la pièce en fonction du temps E_moy(t) peut consister à remplacer l'usure par le temps dans l'expression de l'endommagement moyen de la pièce en fonction de l'usure E_moy(u), à partir de la loi d'évolution de l'usure de la pièce en fonction du temps u(t). Cette étape S16 s'apparente ainsi à un changement de variable, la variable d'usure étant exprimée en fonction de la variable de temps. La loi d'évolution de l'usure de la pièce en fonction du temps u(t) permet ainsi d'exprimer l'endommagement moyen en fonction du temps E_moy(t).

L'endommagement moyen de la pièce en fonction du temps E_moy(t) correspond à un endommagement moyen de la pièce par unité de temps, en particulier par cycle de fonctionnement de la turbomachine.

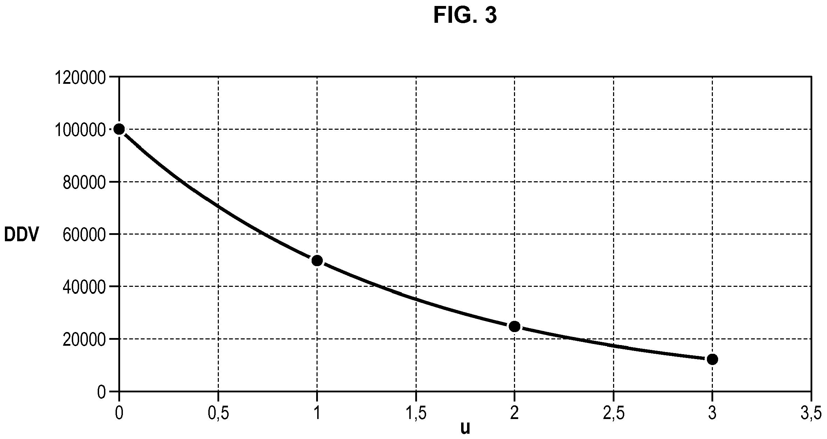

Un exemple de réalisation particulier est illustré aux figures 3, 4 et 5. Le temps est exprimé en nombre de cycles de fonctionnement de la turbomachine.

La figure 3 est un graphe représentant à titre d'exemple la loi d'évolution de la durée de vie à usure constante d'une pièce donnée DDV(u). La durée de vie à usure constante de cette pièce est exprimée en nombre de cycles de fonctionnement de la turbomachine. L'usure est caractérisée par la profondeur d'usure, qui est exprimée en nombre d'unités de profondeur. Les usures u définies correspondent respectivement à 0, 1, 2 et 3 unités de profondeur. L'évaluation de la durée de vie à usure constante de la pièce, l'usure restant par hypothèse constante avec le temps de fonctionnement de la turbomachine, est répétée pour chacune de ces usures u définies. La durée de vie à usure constante de la pièce diminue lorsque l'usure de la pièce augmente. En effet, plus la pièce est usée, plus le nombre de cycles de fonctionnement qu'elle peut subir avant sa rupture est réduit.

La loi d'évolution de la durée de vie à usure constante DDV(u) est illustrée par une courbe convexe décroissante. La durée de vie à usure constante d'une pièce non usée, c'est-à-dire présent une usure de 0 unité de profondeur, est de 100 000 cycles. Pour cette pièce, la durée de vie à usure constante présentant une usure de 3 unités de profondeur est de 12 500 cycles.

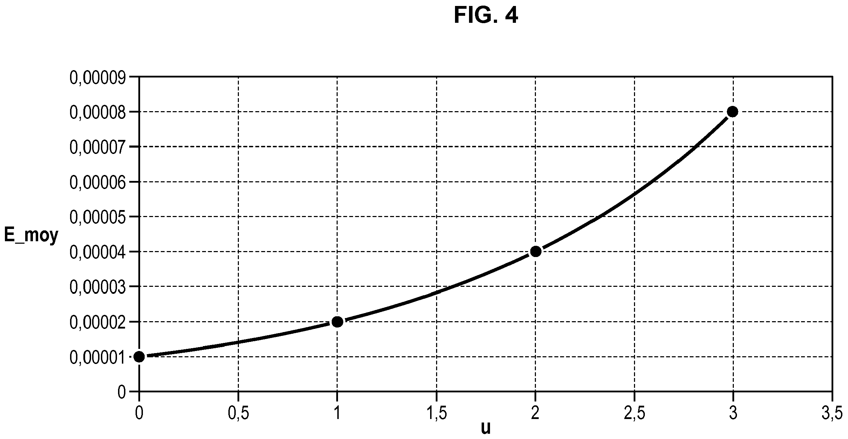

La figure 4 est un graphe représentant la loi d'évolution de l'endommagement moyen de cet exemple de pièce par unité de temps en fonction de la profondeur d'usure E_moy(u). Pour chaque usure u définie, l'usure restant par hypothèse constante avec le temps de fonctionnement de la turbomachine, l'endommagement moyen de la pièce par unité de temps correspond à l'inverse de la durée de vie à usure constante obtenue pour l'usure u définie. L'endommagement moyen de la pièce augmente avec la profondeur d'usure. En effet, plus la pièce est usée, plus les contraintes exercées sur la pièce sont élevées, donc plus l'endommagement moyen de la pièce est important.

La loi d'évolution de l'endommagement moyen de la pièce en fonction de l'usure E_moy(u) correspond à l'inverse de la loi d'évolution de la durée de vie à usure constante de la pièce en fonction de l'usure DDV(u), et est une fonction convexe croissante. L'endommagement moyen de la pièce par cycle de fonctionnement pour une usure de la pièce de 0 unité de profondeur de la pièce est de $10^{-5}$, ce qui correspond à une durée de vie à usure constante de 100 000 cycles. L'endommagement moyen de la pièce par cycle de fonctionnement pour une usure de la pièce de 3 unités de profondeur est de $8 * 10^{-5}$, ce qui correspond à une durée de vie à usure constante de 12 500 cycles.

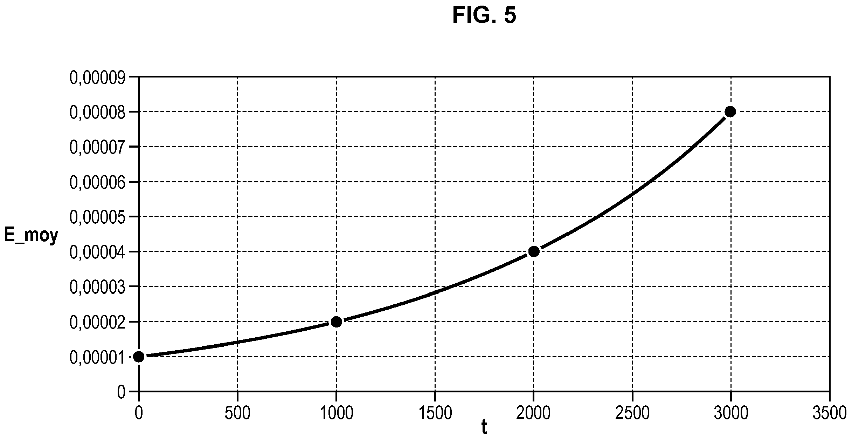

La figure 5 est un graphe représentant la loi d'évolution de l'endommagement moyen de la pièce par unité de temps en fonction du temps de fonctionnement E_moy(t). L'endommagement moyen de la pièce en fonction du temps E_moy(t) est déterminé en remplaçant, dans l'expression de l'endommagement moyen en fonction de l'usure E_moy(u), l'usure par le temps, à partir de la loi d'évolution de l'usure dans le temps u(t).

La loi d'évolution de l'usure avec le temps de fonctionnement u(t) peut être une loi d'évolution linéaire, l'usure augmentant d'une unité de profondeur pour 1000 cycles de fonctionnement de la turbomachine. En variante, la loi d'évolution de l'usure avec le temps de fonctionnement u(t) peut être une loi d'évolution non linéaire.

L'endommagement moyen de la pièce en fonction du temps est une fonction convexe croissante. L'endommagement moyen de la pièce par cycle de fonctionnement pour un temps de fonctionnement t_0 nul, correspondant à une usure nulle de la pièce, est de $10^{-5}$.

L'endommagement moyen de la pièce par cycle de fonctionnement pour un temps de fonctionnement de 3 000 cycles est de $8 * 10^{-5}$.

## Détermination de la durée de vie de la pièce

L'endommagement cumulé de la pièce est déterminé à un temps t, c'est-à-dire après t unités de temps, en particulier après t cycles de fonctionnement. L'endommagement cumulé de la pièce au temps t correspond à l'intégrale de l'endommagement moyen en fonction du temps, entre le temps initial t_0 et le temps t :

$$E\_cum(t) = \int_{t\_0}^{t} E\_moy(t)dt$$

. L'endommagement cumulé de la pièce après t unités de temps de fonctionnement de la turbomachine est ainsi représentatif d'une somme des endommagements moyens de la pièce par unité de temps pendant ces t unités de temps.

La durée de vie de la pièce DDV correspond au temps de fonctionnement de la turbomachine t_rupt au moment de la rupture de la pièce. En particulier, la durée de vie de la pièce DDV correspond à la durée écoulée entre le cycle de fonctionnement initial t_0 de la turbomachine pour la pièce neuve, et le cycle de fonctionnement final t_rupt de la turbomachine au cours duquel la rupture de la pièce survient.

La rupture de la pièce survient lorsque l'endommagement cumulé de la pièce est égal à l'endommagement de la pièce à la rupture E_rupt. La durée de vie DDV de la pièce correspond donc à la valeur de temps t_rupt pour laquelle l'intégrale de l'endommagement moyen de la pièce par unité de temps en fonction du temps, entre le temps initial t_0 et le temps à la rupture t_rupt, correspond à l'endommagement à la rupture de la pièce :

$$E\_cum(t\_rupt) = \int_{t\_0}^{t\_rupt} E\_moy(t)dt = E\_rupt$$

Dans un mode de réalisation, le temps initial t_0 est égal à 0 et correspond à un endommagement de pièce neuve E_neuf égal à 0, la pièce n'ayant subi aucun cycle de fonctionnement et aucun endommagement au temps initial t_0. L'endommagement à la rupture E_rupt est égal à 1.

Le nombre de cycles de fonctionnement au bout duquel l'endommagement cumulé de la pièce est égal à 1 correspond à la durée de vie de la pièce DDV, c'est-à-dire au nombre de cycles de fonctionnement avant rupture t_rupt de la pièce. La valeur du temps à la rupture t_rupt peut alors être déduite de l'équation suivante :

$$\int_{0}^{t\_rupt} E\_moy(t)dt = 1$$ . La valeur du temps à la rupture t_rupt, qui est égal à la durée de vie DDV de la pièce t_rupt = DDV, peut donc être déduite de la loi d'évolution de l'endommagement moyen en fonction du temps E_moy(t).

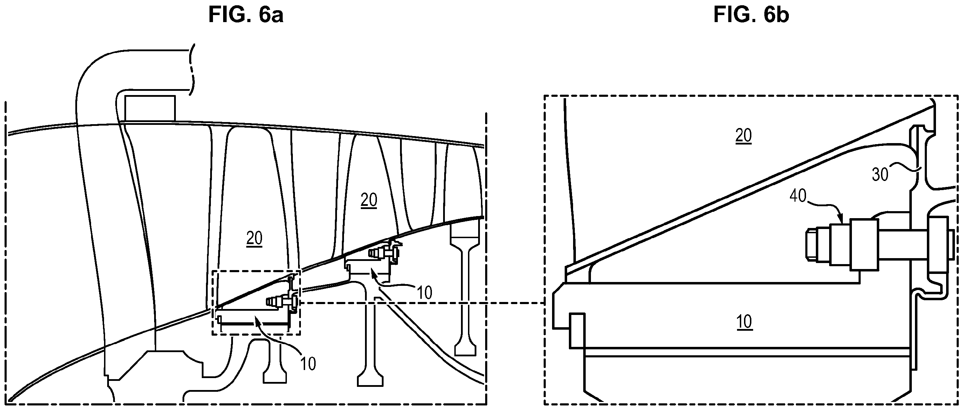

Le procédé peut par exemple être mis en oeuvre pour évaluer la durée de vie DDV d'un disque de compresseur basse pression 10, un tel disque de compresseur basse pression 10 étant illustré à titre d'exemple non limitatif en figures 6a et 6b. Un disque de compresseur basse pression 10 est solidaire en rotation autour d'un axe longitudinal de turbomachine d'un ensemble d'aubes de compresseur basse pression 20 s'étendant radialement depuis le disque. En particulier, un pied d'aube de compresseur basse pression 20 peut être fixé sur le disque de compresseur basse pression 10 au niveau d'une liaison boulonnée 40.

Un amortisseur 30 peut être disposé sous le pied de l'aube 20, à proximité de la fixation 40 de l'aube 20 sur le disque de compresseur 10. L'amortisseur 30 peut comprendre une tôle amortissante. L'amortisseur 30 atténue les vibrations des éléments à son contact.

Une usure, en particulier des usures par petits débattements, peut être causée sur le disque de compresseur basse pression 10 du fait des contacts entre l'amortisseur 30 et le disque 10 en face de l'aube 20 correspondante.

Plus le disque de compresseur basse pression 10 subit un nombre important de cycles de fonctionnement, plus l'usure augmente. La géométrie du disque de compresseur basse pression 10, c'est-à-dire sa surface externe, est impactée par l'évolution de l'usure. Le procédé décrit ci-dessous permet d'évaluer la durée de vie DDV du disque de compresseur basse pression 10, en prenant en compte l'évolution de la géométrie du disque 10 du fait de l'évolution de l'usure avec le temps.

En variante, le procédé peut être appliqué à l'évaluation de la durée de vie DDV de toute pièce de turbomachine présentant une usure évoluant avec le temps et des contraintes évoluant avec l'usure.

**Revendications**

**1.** Procédé d'évaluation d'une durée de vie (DDV) d'une pièce de turbomachine, comprenant les étapes suivantes :

> S1 : déterminer un endommagement moyen de la pièce en fonction du temps (E_moy(t)) à partir d'une loi d'évolution de contraintes appliquées sur la pièce en fonction d'une usure de la pièce ($\sigma(u)$) et d'une loi d'évolution de l'usure de la pièce en fonction du temps (u(t));
> S2 : déterminer un endommagement à la rupture (E_rupt) de la pièce ;
> S3 : déterminer un endommagement cumulé (E_cum) de la pièce correspondant à l'endommagement à la rupture (E_rupt) de la pièce, ledit endommagement cumulé (E_cum) correspondant à l'intégrale de l'endommagement moyen en fonction du temps (E_moy(t)) entre un instant initial (t_0) et un instant final (t_rupt) : *E_cum*
> = *E_rupt* = $\int_{t\_0}^{t\_rupt} E\_moy(t)dt$ ; et
> S4 : en déduire la durée de vie (DDV) de la pièce, ladite durée de vie (DDV) correspondant à l'instant final (t_rupt).

**2.** Procédé d'évaluation d'une durée de vie (DDV) d'une pièce de turbomachine selon la revendication 1, dans lequel l'étape S1 de détermination d'un endommagement moyen de la pièce en fonction du temps (E_moy(t)) comprend une étape S11 dans laquelle sont définies plusieurs usures différentes (u) de la pièce, et comprend les étapes suivantes, réalisées pour chaque usure définie (u) de la pièce :

S12 : déterminer une géométrie de la pièce à partir de l'usure définie (u) à l'étape S11, de sorte à déterminer une loi d'évolution de la géométrie de la pièce en fonction de l'usure (geom(u)),

S13 : déterminer des contraintes appliquées sur la pièce à partir de la géométrie de la pièce déterminée à l'étape S12, de sorte à déterminer une loi d'évolution des contraintes appliquées sur la pièce en fonction de l'usure (σ(u)),

S14 : déterminer une durée de vie à usure constante de la pièce à partir des contraintes appliquées sur la pièce déterminées à l'étape S13, de sorte à déterminer une loi d'évolution de la durée de vie à usure constante de la pièce en fonction de l'usure (DDV(u)),

S15 : déterminer un endommagement moyen de la pièce à partir de la durée de vie à usure constante de la pièce déterminée à l'étape S14, de sorte à déterminer une loi d'évolution de l'endommagement moyen de la pièce en fonction de l'usure (E_moy(u)).

3. Procédé d'évaluation d'une durée de vie (DDV) d'une pièce de turbomachine selon la revendication 2, dans lequel l'étape S1 de détermination d'un endommagement moyen de la pièce en fonction du temps (E_moy(t)) comprend en outre une étape S16 consistant à déterminer l'endommagement moyen de la pièce en fonction du temps (E_moy(t)) à partir de la loi dévolution de l'endommagement moyen de la pièce en fonction de l'usure (E_moy(u)) et de la loi d'évolution de l'usure en fonction du temps (u(t)).

4. Procédé d'évaluation d'une durée de vie (DDV) d'une pièce de turbomachine selon l'une des revendications 2 ou 3, dans lequel la loi d'évolution de l'endommagement moyen de la pièce en fonction de l'usure (E_moy(u)) est égale à l'inverse de la loi d'évolution de la durée de vie à usure constante de la pièce en fonction de l'usure (DDV(u)).

5. Procédé d'évaluation d'une durée de vie (DDV) d'une pièce de turbomachine selon l'une des revendications précédentes, dans lequel le procédé est mis en oeuvre pour évaluer la durée de vie (DDV) d'un disque de compresseur basse pression (10).

6. Procédé d'évaluation d'une durée de vie (DDV) d'une pièce de turbomachine selon l'une des revendications précédentes, dans lequel la loi d'évolution de l'usure de la pièce en fonction du temps (u(t)) est une loi d'évolution de la profondeur de l'usure en fonction du temps.

7. Procédé d'évaluation d'une durée de vie (DDV) d'une pièce de turbomachine selon l'une des revendications précédentes, dans lequel l'endommagement à la rupture (E_rupt) de la pièce est égal à 1.

## Patentansprüche

1. Verfahren zur Beurteilung einer Lebensdauer (DDV) eines Turbomaschinenteils, das die folgenden Schritte umfasst:

S1: Bestimmen einer mittleren Beschädigung des Teils in Abhängigkeit von der Zeit (E_moy(t)) ausgehend von einem Verlaufsgesetz der auf das Teil ausgeübten Belastungen in Abhängigkeit von einem Verschleiß des Teils (σ(u)) und einem Verlaufsgesetz des Verschleißes des Teils in Abhängigkeit von der Zeit (u(t));

S2: Bestimmen einer Bruchbeschädigung (E_rupt) des Teils;

S3: Bestimmen einer kumulierten Beschädigung (E_cum) des Teils, die der Bruchbeschädigung (E_rupt) des Teils entspricht, wobei die kumulierte Beschädigung (E_cum) dem Integral der mittleren Beschädigung in Abhängigkeit von der Zeit (E_moy(t)) zwischen einem Anfangszeitpunkt (t_0) und einem Endzeitpunkt (t_rupt) entspricht: $$E\_cum = E\_rupt = \int_{t\_0}^{t\_rupt} E\_moy(t)dt$$ ; und

S4: Ableiten daraus der Lebensdauer (DDV) des Teils, wobei die Lebensdauer (DDV) dem Endzeitpunkt (t_rupt) entspricht.

2. Verfahren zur Beurteilung einer Lebensdauer (DDV) eines Turbomaschinenteils nach Anspruch 1, wobei der Schritt S1 des Bestimmens einer mittleren Beschädigung des Teils in Abhängigkeit von der Zeit (E_moy(t)) einen Schritt S11 umfasst, bei dem mehrere verschiedene Verschleiße (u) des Teils definiert werden, und die folgenden Schritte umfasst, die für jeden definierten Verschleiß (u) des Teils durchgeführt werden:

S12: Bestimmen einer Geometrie des Teils ausgehend von dem in Schritt S11 definierten Verschleiß (u), so dass ein Verlaufsgesetz der Geometrie des Teils in Abhängigkeit vom Verschleiß (geom(u)) bestimmt wird,

S13: Bestimmen der auf das Teil ausgeübten Belastungen ausgehend von der in Schritt S12 bestimmten Geometrie des Teils, so dass ein Verlaufsgesetz der auf das Teil ausgeübten Belastungen in Abhängigkeit vom Verschleiß ($\sigma$(u)) bestimmt wird,

S14: Bestimmen einer Lebensdauer bei konstantem Verschleiß des Teils ausgehend von den in Schritt S13 bestimmten, auf das Teil ausgeübten Belastungen, so dass ein Verlaufsgesetz der Lebensdauer bei konstantem Verschleiß des Teils in Abhängigkeit vom Verschleiß (DDV(u)) bestimmt wird,

S15: Bestimmen einer mittleren Beschädigung des Teils ausgehend von der in Schritt S14 bestimmten Lebensdauer bei konstantem Verschleiß des Teils, so dass ein Verlaufsgesetz der mittleren Beschädigung des Teils in Abhängigkeit vom Verschleiß (E_moy(u)) bestimmt wird.

3. Verfahren zur Beurteilung einer Lebensdauer (DDV) eines Turbomaschinenteils nach Anspruch 2, wobei der Schritt S1 zum Bestimmen einer mittleren Beschädigung des Teils in Abhängigkeit von der Zeit (E_moy(t)) ferner einen Schritt S16 umfasst, der darin besteht, die mittlere Beschädigung des Teils in Abhängigkeit von der Zeit (E_moy(t)) ausgehend vom Verlaufsgesetz der mittleren Beschädigung des Teils in Abhängigkeit vom Verschleiß (E_moy(u)) und vom Verlaufsgesetz des Verschleißes in Abhängigkeit von der Zeit (u(t)) zu bestimmen.

4. Verfahren zur Beurteilung einer Lebensdauer (DDV) eines Turbomaschinenteils nach einem der Ansprüche 2 oder 3, wobei das Verlaufsgesetz der mittleren Beschädigung des Teils in Abhängigkeit vom Verschleiß (E_moy(u)) gleich dem Kehrwert des Verlaufsgesetzes der Lebensdauer bei konstantem Verschleiß des Teils in Abhängigkeit vom Verschleiß (DDV(u)) ist.

5. Verfahren zur Beurteilung einer Lebensdauer (DDV) eines Turbomaschinenteils nach einem der vorhergehenden Ansprüche, wobei das Verfahren zum Beurteilen der Lebensdauer (DDV) einer Niederdruckverdichterscheibe (10) durchgeführt wird.

6. Verfahren zur Beurteilung einer Lebensdauer (DDV) eines Turbomaschinenteils nach einem der vorhergehenden Ansprüche, wobei das Verlaufsgesetz des Verschleißes des Teils in Abhängigkeit von der Zeit (u(t)) ein Verlaufsgesetz der Verschleißtiefe in Abhängigkeit von der Zeit ist.

7. Verfahren zur Beurteilung einer Lebensdauer (DDV) eines Turbomaschinenteils nach einem der vorhergehenden Ansprüche, wobei die Bruchbeschädigung (E_rupt) des Teils gleich 1 ist.

**Claims**

1. A method for evaluating a lifetime (DDV) of a turbomachine part, comprising the following steps:

S1: determining an average damage of the part as a function of time (E_moy(t)) based on a relationship expressing the stresses applied to the part as a function of a wear of the part ($\sigma$(u)) and of a relationship expressing the wear of the part as a function of time (u(t));

S2: determining a damage at failure (E_rupt) of the part;

S3: determining a cumulative damage (E_cum) of the part corresponding to the damage at failure (E_rupt) of the part, said cumulative damage (E_cum) corresponding to the integral of the average damage as a function of time (E_moy(t)) between an initial time (t_0) and a final time

$$(t\_rupt): E\_cum = E\_rupt = \int_{t\_0}^{t\_rupt} E\_moy(t)dt \text{ ; and}$$

S4 : deducing therefrom the lifetime (DDV) of the part, said lifetime (DDV) corresponding to the final time (t_rupt).

2. The method for evaluating a lifetime (DDV) of a turbomachine part as claimed in claim 1, wherein the step S1 of determining an average damage of the part as a function of time (E_moy(t)) comprises a step S11 wherein are defined several different wears (u) of the part, and comprises the following steps, carried out for each defined wear (u) of the part:

S12: determining a part geometry based on wear (u) defined in step S11, such as to determine a relationship expressing the part geometry as a function of wear (geom(u)),

S13: determining stresses applied to the part based on the part geometry determined in step S12, such as to determine a relationship expressing the stresses applied to the part as a function of wear ($\sigma$(u)),

S14: determining a lifetime at constant wear of the part based on the stresses applied to the part determined in step S13, such as to determine a relationship expressing the lifetime at constant wear of the part as a function of wear (DDV(u)),

S15: determining an average damage of the part based on the lifetime at constant wear of the part determined in step S14, such as to determine a relationship expressing the average damage of the part as a function of wear (E_moy(u)).

3. The method for evaluating a lifetime (DDV) of a turbomachine part as claimed in claim 2, wherein the step S1 of determining an average damage of the part as a function of time (E_moy(t)) further comprises a step S16 consisting in determining the average damage of the part as a function of time (E_moy(t)) based on the relationship expressing the average damage of the part as a function of wear (E_moy(u)) and of the relationship expressing the wear as a function of time (u(t)).

4. The method for evaluating a lifetime (DDV) of a turbomachine part as claimed in one of claims 2 or 3, wherein the relationship expressing the average damage of the part as a function of wear (E_moy(u)) is equal to the inverse of the relationship expressing the lifetime at constant wear of the part as a function of wear (DDV(u)).

5. The method for evaluating a lifetime (DDV) of a turbomachine part as claimed in one of the preceding claims, wherein the method is implemented to evaluate the lifetime (DDV) of a low-pressure compressor disc (10).

6. The method for evaluating a lifetime (DDV) of a turbomachine part as claimed in one of the preceding claims, wherein the relationship expressing the wear of the part as a function of time (u(t)) is a relationship expressing the wear depth as a function of time.

7. The method for evaluating a lifetime (DDV) of a turbomachine part as claimed in one of the preceding claims, wherein the damage at failure (E_rupt) of the part is equal to 1.

EP 4 232 789 B1

**FIG. 1**

S1

S13
σ(u)

u(t)

S16
E_moy(t)

S3
E_cum(t) =
$\int_{t\_0}^{t}$ E_moy(t) dt

S2
E_rupt

S4
DDV = t_rupt

**FIG. 2**

S11
(u)

S12
geom(u)

S13
σ(u)

S14
DDV(u)

S15
E_moy(u)

S16
E_moy(t)

u(t)

S1

FIG. 3

EP 4 232 789 B1

EP 4 232 789 B1

## FIG. 4

FIG. 5

FIG. 6a

FIG. 6b

EP 4 232 789 B1